# EUROPÄISCHE PATENTANMELDUNG

(11) **EP 3 929 428 A1**
(43) Veröffentlichungstag der Anmeldung: **29.12.2021**
(21) Anmeldenummer: 21181608.7
(22) Anmeldetag: 24.06.2021
(51) Int. Cl.: F02M 43/04, F02M 45/04, F02M 45/08, F02M 47/02

(54) **KRAFTSTOFFINJEKTOR EINER DUAL-FUEL BRENNKRAFTMASCHINE UND DUAL-FUEL BRENNKRAFTMASCHINE**

(30) Priorität: 25.06.2020 DE 102020116707
(71) Anmelder: MAN Energy Solutions SE, 86153 Augsburg (DE)
(72) Erfinder: Wloka, Johann, 81735 München (DE)

(57) **Zusammenfassung**

Kraftstoffinjektor (16) einer Dual-Fuel Brennkraftmaschine, der dazu ausgebildet ist einer Brennkammer (33) eines Zylinders (12) der Dual-Fuel Brennkraftmaschine Kraftstoff zuzuführen, mit einem Grundkörper (27), mit einer in einer Nadelführung (30) des Grundkörpers (27) bewegbar geführten Düsennadel (28), mit einem vom Grundkörper (27) definierten Nadelkraftstoffraum (31), der über Öffnungen (32) mit der Brennkammer (33) des Zylinders (12) koppelbar ist, wobei die Öffnungen (32) in einer ersten Stellung der Düsennadel (28) geöffnet und in einer zweiten Stellung der Düsennadel (28) geschlossen sind, wobei in den Grundkörper (27) eine erste Leitung (34) eingebracht ist, die mit dem Nadelkraftstoffraum (31) gekoppelt ist, wobei über die erste Leitung (34) ein Kraftstoff in den Nadelkraftstoffraum (31) einbringbar ist, und wobei in den Grundkörper (27) eine von der ersten Leitung (34) getrennte zweite Leitung (35) eingebracht ist, die einerseits mit der Nadelführung (30) und andererseits mit einem Steuerraum (36) eines Steuerventils (29) des Kraftstoffinjektors (16) gekoppelt ist, wobei über die zweite Leitung (25) ein Kraftstoff der Nadelführung (30) als Sperrfluid und dem Steuerraum (36) als Arbeitsfluid zuführbar ist.

## Beschreibung

Die Erfindung betrifft einen Kraftstoffinjektor einer Dual-Fuel Brennkraftmaschine. Des Weiteren betrifft die Erfindung eine Dual-Fuel Brennkraftmaschine.

Die hier vorliegende Erfindung betrifft insbesondere den Bereich sogenannter Großmotoren bzw. Großbrennkraftmaschinen, deren Zylinder Kolbendurchmesser von mindestens 140 mm, insbesondere von mindestens 175 mm, aufweisen. Bei solchen Großbrennkraftmaschinen handelt es sich zum Beispiel um Schiffsmotoren.

Als Schiffsmotoren sind bereits Dual-Fuel Brennkraftmaschinen bekannt. Aus der Praxis bekannte Dual-Fuel Brennkraftmaschinen können in einem ersten Betriebsmodus betrieben werden, in welchem dieselben einen flüssigen Kraftstoff verbrennen, sowie in einem zweiten Betriebsmodus, in welchem dieselben einen gasförmigen Kraftstoff oder einen anderen flüssigen Kraftstoff verbrennen.

Aus der DE 10 2017 123 315 A1 ist eine Dual-Fuel Brennkraftmaschine mit einem Dual-Fuel Kraftstoffinjektor bekannt. Jeder Kraftstoff wird über eine separate Kraftstoffpumpe in Richtung auf den Dual-Fuel Kraftstoffinjektor gefördert. Ferner ist ein separates Dichtungs- und Schmierölsystem vorhanden.

Hiervon ausgehend liegt der vorliegenden Erfindung die Aufgabe zugrunde, einen neuartigen Kraftstoffinjektor einer Dual-Fuel Brennkraftmaschine und eine Dual-Fuel Brennkraftmaschine mit einem solchen Kraftstoffinjektor zu schaffen.

Diese Aufgabe wird durch einen Kraftstoffinjektor nach Anspruch 1 gelöst.

Der Kraftstoffinjektor ist dazu ausgebildet, einer Brennkammer eines Zylinders der Dual-Fuel Brennkraftmaschine flüssigen Kraftstoff zuzuführen. Der Kraftstoffinjektor verfügt über einen Grundkörper, über eine in einer Nadelführung des Grundkörpers bewegbar geführte Düsennadel, und über einen vom Grundkörper definierten Nadelkraftstoffraum, der über Öffnungen mit der Brennkammer koppelbar ist, wobei die Öffnungen in einer ersten Stellung der Düsennadel geöffnet und in einer zweiten Stellung der Düsennadel geschlossen sind.

In den Grundkörper des Kraftstoffinjektors ist eine erste Leitung eingebracht, die mit dem Nadelkraftstoffraum gekoppelt ist, wobei über die erste Leitung ein flüssiger Kraftstoff in den Nadelkraftstoffraum einbringbar ist.

In den Grundkörper des Kraftstoffinjektors ist ferner eine von der ersten Leitung getrennte zweite Leitung eingebracht, die einerseits mit der Nadelführung und andererseits mit einem Steuerraum eines Steuerventils des Kraftstoffinjektors gekoppelt ist, wobei über die zweite Leitung ein flüssiger Kraftstoff der Nadelführung als Sperrfluid und dem Steuerraum als Arbeitsfluid zuführbar ist.

Der erfindungsgemäße Kraftstoffinjektor erlaubt eine besonders vorteilhafte Kraftstoffinjektion in den Brennraum eines jeweiligen Zylinders einer Dual-Fuel Brennkraftmaschine, welche flüssige Kraftstoffe verbrennt. In einem Betriebsmodus der Dual-Fuel-Brennkraftmaschine kann über den Kraftstoffinjektor ein Kraftstoff in die Brennkammer des jeweiligen Zylinders eingespritzt werden, wobei in diesem Betriebsmodus vorzugsweise ein anderer Kraftstoff, der in einem anderen Betriebsmodus in die jeweilige Brennkammer des jeweiligen Zylinders einzubringen ist, als Sperrfluid und Arbeitsfluid dient. Dies erlaubt einen besonders einfachen Aufbau des Kraftstoffinjektors.

Nach einer Weiterbildung ist der Kraftstoffinjektor eine Dual-Fuel Injektor, wobei in einem ersten Betriebsmodus der Dual-Fuel Brennkraftmaschine der ersten Leitung und der zweiten Leitung jeweils ein erster, relativ zündwilliger Kraftstoff zuführbar ist, und wobei in einem zweiten Betriebsmodus der Dual-Fuel Brennkraftmaschine der zweiten Leitung der erste Kraftstoff und der ersten Leitung ein zweiter, relativ zündunwilliger zuführbar Kraftstoff ist. Ein derartiger Dual-Fuel-Injektor ist besonders bevorzugt und erlaubt einen besonders einfachen Aufbau einer Dual-Fuel-Brennkraftmaschine.

Nach einer Weiterbildung der Erfindung ist die zweite Leitung mit dem Steuerraum des Steuerventils über eine Drossel gekoppelt. Dies ist bevorzugt, um den jeweiligen Kraftstoff dem Steuerraum des Steuerventils zuzuführen.

Die erfindungsgemäße Dual-Fuel Brennkraftmaschine ist in Anspruch 6 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: ein Schema eines Schiffsantriebssystems mit einer Dual-Fuel Brennkraftmaschine;
- Fig. 2: einen Ausschnitt aus der Dual-Fuel Brennkraftmaschine im Bereich eines Zylinders;
- Fig. 3: einen Querschnitt durch einen Kraftstoffinjektor der Dual-Fuel Brennkraftmaschine.

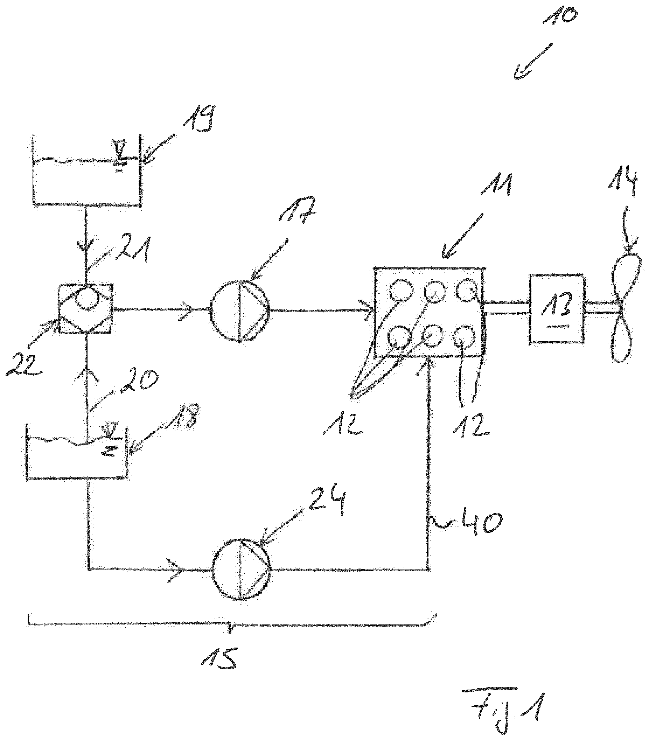

Fig. 1 zeigt stark schematisiert ein Schiffsantriebssystem 10, welches eine Dual-Fuel Brennkraftmaschine 11 mit mehreren Zylindern 12 aufweist.

In den Zylindern 12 wird Kraftstoff verbrannt, und zwar in einem ersten Betriebsmodus der Dual-Fuel Brennkraftmaschine 11 ein erster flüssiger Kraftstoff und in einem zweiten Betriebsmodus der Dual-Fuel Brennkraftmaschine 11 ein zweiter flüssiger Kraftstoff. Bei der Verbrennung des jeweiligen Kraftstoffs erzeugt die Dual-Fuel Brennkraftmaschine 11 Antriebsleistung, die in Fig. 1 dazu genutzt wird, einen Generator 13 anzutreiben. Im Generator 13 wird elektrische Energie erzeugt, die dem Antrieb eines Schiffspropellers 14 dient.

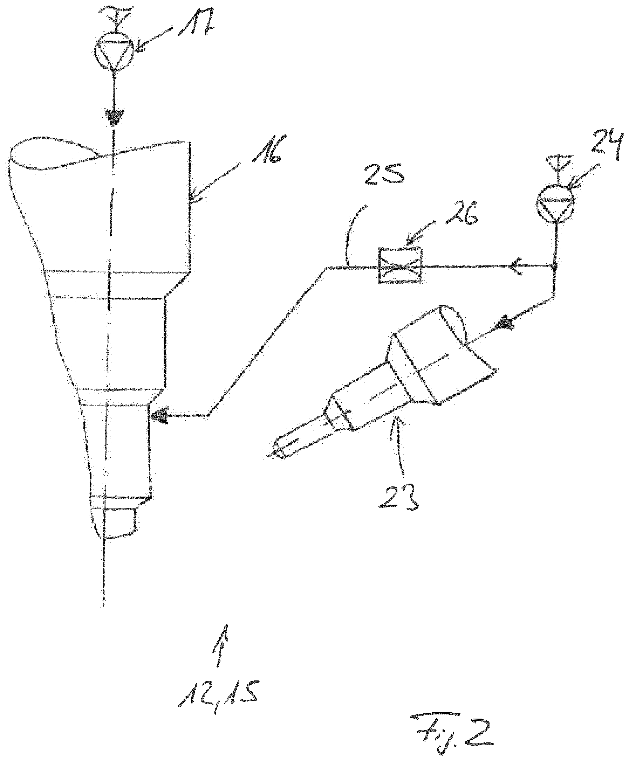

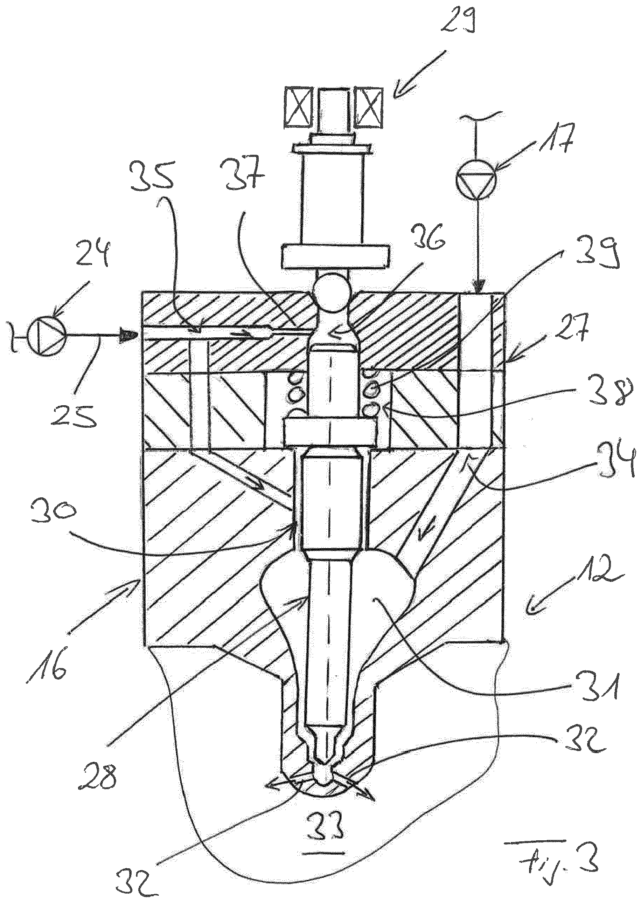

Fig. 1 zeigt weiterhin ein Kraftstoffversorgungssystem 15 der Dual-Fuel Brennkraftmaschine 11. Fig. 2, 3 zeigen weitere Baugruppen des Kraftstoffversorgungssystems 15. Über das Kraftstoffversorgungssystem 15 kann im jeweiligen Betriebsmodus der Dual-Fuel Brennkraftmaschine 11 den Zylindern 12 derselben der jeweilige flüssige Kraftstoff zugeführt werden. Das Kraftstoffversorgungssystem 15 der Dual-Fuel Brennkraftmaschine 11 verfügt über ein Haupteinspritzsystem sowie ein Piloteinspritzsystem.

Über das Haupteinspritzsystem, welches je Zylinder 12 mindestens einen Hauptinjektor 16 (siehe Fig. 2, 3) umfasst, kann den Zylindern 12 in dem ersten Betriebsmodus der erste flüssige Kraftstoff, der relativ zündwillig ist, und im zweiten Betriebsmodus der zweite flüssige Kraftstoff, der relativ zündunwillig ist, zugeführt werden. Über diesen Hauptinjektor 16 kann in den jeweiligen Zylinder 12 im ersten Betriebsmodus der erste flüssige Kraftstoff und im zweiten Betriebsmodus der zweite flüssige Kraftstoff in den Zylinder 12 eingespritzt werden. Obwohl es aus Kostengründen bevorzugt ist, über denselben Hauptinjektor 16 im ersten Betriebsmodus den ersten flüssigen Kraftstoff und im zweiten Betriebsmodus den zweiten flüssigen Kraftstoff in den jeweiligen Zylinder 12 der Dual-Fuel Brennkraftmaschine einzuspritzen, ist des alternativ auch möglich, dass jeder Zylinder 12 für jeden der beiden flüssigen Kraftstoffe einen separaten Hauptinjektor aufweist.

Die dargestellte Ausführung, in welcher derselbe Hauptinjektor 16 im ersten Betriebsmodus zum Einspritzen des ersten flüssigen Kraftstoffs und im zweiten Betriebsmodus zum Einspritzen des zweiten flüssigen Kraftstoffs in den jeweiligen Zylinder genutzt wird, ist bevorzugt.

Gemäß Fig. 2 ist dem jeweiligen Hauptinjektor 16 der jeweilige flüssige Kraftstoff über eine Hauptpumpe 17 zuführbar, die demnach im ersten Betriebsmodus den ersten flüssigen Kraftstoff und im zweiten Betriebsmodus den zweiten flüssigen Kraftstoff in Richtung auf den jeweiligen Hauptinjektor 16 fördert.

Fig. 1 zeigt einen ersten Kraftstoffstank 18 zur Bereithaltung des ersten flüssigen Kraftstoffs und einen zweiten Kraftstofftank 19 zur Bereithaltung des zweiten flüssigen Kraftstoffs. Der erste Kraftstofftank 18 ist über eine erste Kraftstoffleitung 20 und der zweite Kraftstofftank 19 über eine zweite Kraftstoffleitung 21 mit der Hauptpumpe 17 koppelbar, und zwar über ein Wechselventil 22.

Im ersten Betriebsmodus koppelt das Wechselventil 22 den ersten Kraftstofftank 18 bzw. die erste Kraftstoffleitung 20 mit der Hauptpumpe 17 des Haupteinspritzsystems, um den Zylindern 12 der Dual-Fuel Brennkraftmaschine 11 den ersten Kraftstoff 18 zuzuführen. In diesem ersten Betriebsmodus trennt das Wechselventil 22 den zweiten Kraftstofftank 19 von der Hauptpumpe 17 des Haupteinspritzsystems.

Im zweiten Betriebsmodus hingegen nimmt das Wechselventil 22 eine Schaltstellung ein, in welcher der zweite Kraftstofftank 19 über die zweite Kraftstoffleitung 21 an die Hauptpumpe 17 des Haupteinspritzsystems gekoppelt ist, um im zweiten Betriebsmodus den Zylindern 12 der Dual-Fuel Brennkraftmaschine 11 den zweiten Kraftstoff zuzuführen. In diesem zweiten Betriebsmodus ist dann der erste Kraftstofftank 18 von der Hauptpumpe 17 des Haupteinspritzsystems getrennt.

Wie bereits ausgeführt, ist der erste flüssige Kraftstoff relativ zündwillig und der zweite flüssige Kraftstoff relativ zündunwillig. Um den zweiten flüssigen Kraftstoff im zweiten Betriebsmodus im Bereich des jeweiligen Zylinders 12 zu zünden, verfügt die Dual-Fuel Brennkraftmaschine über das Piloteinspritzsystem, welches je Zylinder 12 mindestens einen Pilotinjektor 23 aufweist.

Über das Piloteinspritzsystem kann in dem zweiten Betriebsmodus den Zylindern 12 der Brennkraftmaschine der erste flüssige Kraftstoff zur Zündung des zweiten flüssigen Kraftstoffs zugeführt werden. So verfügt das Piloteinspritzsystem neben dem mindestens einen Pilotinjektor 23 je Zylinder 12 über eine Pilotpumpe 24, über die dann im zweiten Betriebsmodus der jeweilige Pilotinjektor 23 mit dem ersten flüssigen Kraftstoff, ausgehend vom ersten Kraftstofftank 18, versorgt werden kann. Vom ersten Kraftstofftank 18 erstreckt sich eine weitere Kraftstoffleitung 40 in Richtung auf die Zylinder 12, wobei in diese weitere Kraftstoffleitung 40 die Pilotpumpe 24 geschaltet ist.

Bei der Dual-Fuel Brennkraftmaschine 11 sind, wie Fig. 2 entnommen werden kann, das Haupteinspritzsystem und das Piloteinspritzsystem gekoppelt, nämlich derart, dass in dem zweiten Betriebsmodus ausgehend vom Piloteinspritzsystem, welches je Zylinder 12 den mindestens einen Pilotinjektor 23 und die Pilotpumpe 24 umfasst, der erste flüssige Kraftstoff dem jeweiligen Hauptinjektor 16 des Haupteinspritzsystems zuführbar ist, wobei der erste flüssige Kraftstoff im zweiten Betriebsmodus im Bereich des jeweiligen Hauptinjektors 16 als Arbeitsfluid und als Sperrfluid, dient. So zeigt Fig. 2 eine Abzweigleitung 25, die vom Piloteinspritzsystem stromaufwärts des jeweiligen Pilotinjektors 23 abzweigt und zum jeweiligen Hauptinjektor 16 des Haupteinspritzsystems des jeweiligen Zylinders 12 führt und in das Haupteinspritzsystem im Bereich des jeweiligen Hauptinjektors 16 mündet. Dabei zweigt die Abzweigleitung 25 in Förderrichtung des Piloteinspritzsystems gesehen stromabwärts der Pilotpumpe 24 und stromaufwärts des jeweiligen Pilotinjektors 23 vom Piloteinspritzsystem ab, um im zweiten Betriebsmodus den ersten flüssigen Kraftstoff dem jeweiligen Hauptinjektor 16 des Haupteinspritzsystems als Arbeitsfluid und Sperrfluid zuzuführen.

Im zweiten Betriebsmodus herrscht dabei in der vom Piloteinspritzsystem zum Haupteinspritzsystem führenden, jeweiligen Abzweigleitung 25 ein Druck, der größer ist als der Druck im Bereich des jeweiligen Hauptinjektors 16, vorzugsweise um einen definierten Druck-Offset. Hierdurch wird im zweiten Betriebsmodus sichergestellt, dass der erste flüssige Kraftstoff dem jeweiligen Hauptinjektor 16 stets zuverlässig zugeführt werden kann.

In Fig. 2 ist in die dort gezeigte Abzweigleitung 25 ein Druckminderer 26 integriert. Dieser begrenzt den Druck in der jeweiligen Abzweigleitung 25 stromabwärts des Druckminderers 26 auf ein definiertes Niveau.

Bei dem ersten flüssigen Kraftstoff, der relativ zündwillig ist, handelt es sich vorzugsweise um einen flüssigen Kraftstoff, der eine Schmierfähigkeit WSD zwischen 100 µm und 300 µm, vorzugsweise zwischen 100 µm und 200 µm, aufweist. Beim zweiten flüssigen Kraftstoff, der relativ zündunwillig ist, handelt es sich vorzugsweise um einen flüssigen Kraftstoff, der eine Schmierfähigkeit WSD zwischen 300 µm und 820 µm, vorzugsweise zwischen 400 µm und 820 µm, aufweist. Beim ersten flüssigen Kraftstoff handelt es sich vorzugsweise um einen Dieselkraftstoff. Beim zweiten flüssigen Kraftstoff handelt es sich vorzugsweise um Ethanol oder Methanol.

Bei der Dual-Fuel Brennkraftmaschine 11, die in beiden Betriebsmodi jeweils einen flüssigen Kraftstoff verbrennt, dient der erste flüssige Kraftstoff im zweiten Betriebsmodus einerseits zur Zündung des zweiten flüssigen Kraftstoffs und andererseits als Arbeitsfluid und Sperrfluid im Bereich des jeweiligen Hauptinjektors 16. Im zweiten Betriebsmodus nutzen demnach Hauptinjektor 16 und Pilotinjektor 23 des jeweiligen Zylinders 12 den ersten flüssigen Kraftstoff einerseits als Zündfluid, welches über den jeweiligen Pilotinjektor 23 in den jeweiligen Zylinder 12 eingebracht wird, und andererseits als Arbeitsfluid und Sperrfluid im Bereich des Hauptinjektors 16 des jeweiligen Zylinders 12.

Fig. 3 zeigt einen schematisierten Querschnitt durch einen Hauptinjektor 16 der Dual-Fuel-Brennkraftmaschine 11, der im Sinne der hier vorliegenden Erfindung ausgebildet ist.

Der Kraftstoffinjektor 16 verfügt über einen vorzugsweisen mehrteiligen Grundkörper 27, über eine Düsennadel 28 sowie über ein Steuerventil 29.

Die Düsennadel 28 ist in einer Nadelführung 30 des Grundkörpers 27 bewegbar geführt. Der Grundkörper 27 definiert einen Nadelkraftstoffraum 31. Dieser Nadelkraftstoffraum 31 ist über Öffnungen 32 mit einer Brennkammer 33 des jeweiligen Zylinders 12 koppelbar. In einer Stellung der Düsennadel 28 verschließt dieselbe die Öffnungen 32, in einer zweiten Stellung der Düsennadel 28 gibt dieselbe die Öffnungen 32 frei.

In den Grundkörper 27 ist eine erste Leitung 34 eingebracht. Über diese erste Leitung 34 ist dem Nadelkraftstoffraum 31 ein Kraftstoff zuführbar.

Im gezeigten Ausführungsbeispiel, bei welchem es sich beim Hauptinjektor 16 um einen Dual-Fuel-Injektor einer Dual-Fuel-Brennkraftmaschine 11 handelt, ist dem Nadelkraftstoffraum 31 des Hauptinjektors 16 im ersten Betriebsmodus der Dual-Fuel-Brennkraftmaschine 11 über die erste Leitung 34 der erste, relativ zündwillige Kraftstoff ausgehend vom ersten Kraftstofftank 18 über die Hauptpumpe 17 zuführbar. Im zweiten Betriebsmodus der Dual-Fuel-Brennkraftmaschine 11 ist dem Nadelkraftstoffraum 31 des Hauptinjektors 16 über die erste Leitung 34, ausgehend vom zweiten Kraftstofftank 19 der zweite, relativ zündunwillige Kraftstoff über die Hauptpumpe 17 zuführbar. Wie oben ausgeführt nimmt hierzu das Wechselventil 22 die jeweilige Schaltstellung ein.

In den Grundkörper 27 ist zusätzlich zur ersten Leitung 34 eine zweite Leitung 35 eingebracht, die von der ersten Leitung 34 getrennt ist. Über diese zweite Leitung 35 ist einerseits der Nadelführung 30 und andererseits einem Steuerraum 36 des Steuerventils 29 des Hauptinjektors 16 der erste Kraftstoff zuführbar, und zwar im zweiten Betriebsmodus der Dual-Fuel-Brennkraftmaschine 11. Der erste Kraftstoff ist ausgehend vom Piloteinspritzsystem über die in Fig. 2 gezeigte Abzweigleitung 25, die den ersten Kraftstoff stromabwärts der Pilotpumpe 24 und stromaufwärts des Pilotinjektors 23 abzweigt, in Richtung auf den Hauptinjektor 16 führbar, nämlich in Richtung auf die zweite Leitung 35 desselben. Der erste Kraftstoff, welcher über die zweite Leitung 35 der Nadelführung 30 zugeführt wird, dient dort als Sperrfluid. Derjenige erste Kraftstoff, der über die erste Leitung 35 dem Steuerraum 36 des Steuerventils 29 zugeführt wird, dient dort als Arbeitsfluid. Dieser als Arbeitsfluid dienende Kraftstoff ist über eine zum Steuerraum 36 führende Drossel 37 dem Steuerraum 36 zuführbar.

Wie bereits oben im Zusammenhang mit Fig. 2 ausgeführt, ist der Druck in der Abzweigleitung 25 und damit der Druck in der zweiten Leitung 35 größer als der Druck in der ersten Leitung 34. So kann im Bereich der Nadelführung 30 eine besonders vorteilhafte Sperrwirkung über das Sperrfluid bereitgestellt werden.

Beim erfindungsgemäßen Kraftstoffinjektor dient demnach der über die zweite Leitung 35 geführte Kraftstoff einerseits als Sperrfluid und andererseits als Arbeitsfluid. Dies ermöglicht einen besonders einfachen Aufbau des Kraftstoffinjektors 16 sowie einer den Kraftstoffinjektor 16 aufweisenden Dual-Fuel-Brennkraftmaschine 11. Im zweiten Betriebsmodus, in welchem der zweite Kraftstoff in den Zylindern 12 verbrannt wird, ist eine einfache Trennung zwischen dem zu verbrennenden zweiten Kraftstoff und dem als Sperrfluid und Arbeitsfluid dienenden ersten Kraftstoff möglich.

Gemäß Fig. 3 ist die Nadelführung 30 zwischen dem Nadelkraftstoffraum 31 und dem Steuerraum 36 des Steuerventils 29 positioniert.

Zwischen der Nadelführung 30 und dem Steuerraum 36 ist ein Federraum 38 positioniert, in welchem eine Feder 39 aufgenommen ist, welche die Düsennadel 28 in die zweite Stellung drückt.

Die betrifft insbesondere den Bereich sogenannter Großmotoren bzw. Großbrennkraftmaschinen, deren Zylinder Kolbendurchmesser von mindestens 140 mm, insbesondere von mindestens 175 mm, aufweisen. Bei solchen Großbrennkraftmaschinen handelt es sich zum Beispiel um Schiffsmotoren. Diese sind bei der Erfindung als Dual-Fuel Brennkraftmaschinen ausgeführt.

### Bezugszeichenliste

- 10: Schiffsantriebssystems
- 11: Dual-Fuel Brennkraftmaschine
- 12: Zylinder
- 13: Generator
- 14: Schiffspropeller
- 15: Kraftstoffversorgungssystem
- 16: Hauptinjektor
- 17: Hauptpumpe
- 18: Kraftstofftank
- 19: Kraftstofftank
- 20: Kraftstoffleitung
- 21: Kraftstoffleitung
- 22: Wechselventil
- 23: Pilotinjektor
- 24: Pilotpumpe
- 25: Abzweigleitung
- 26: Druckminderer
- 27: Grundkörper
- 28: Düsennadel
- 29: Steuerventil
- 30: Nadelführung
- 31: Nadelkraftstoffraum
- 32: Öffnung
- 33: Brennkammer
- 34: Leitung
- 35: Leitung
- 36: Steuerraum
- 37: Drossel
- 38: Federraum
- 39: Feder
- 40: Kraftstoffleitung

## Patentansprüche

1. Kraftstoffinjektor (16) einer Dual-Fuel Brennkraftmaschine (11), die dazu ausgebildet ist einer Brennkammer (33) eines Zylinders (12) der Dual-Fuel Brennkraftmaschine (11) Kraftstoff zuzuführen,
mit einem Grundkörper (27),
mit einer in einer Nadelführung (30) des Grundkörpers (27) bewegbar geführten Düsennadel (28),
mit einem vom Grundkörper (27) definierten Nadelkraftstoffraum (31), der über Öffnungen (32) mit der Brennkammer (33) des Zylinders (12) koppelbar ist, wobei die Öffnungen (32) in einer ersten Stellung der Düsennadel (28) geöffnet und in einer zweiten Stellung der Düsennadel (28) geschlossen sind,
wobei in den Grundkörper (27) eine erste Leitung (34) eingebracht ist, die mit dem Nadelkraftstoffraum (31) gekoppelt ist, wobei über die erste Leitung (34) ein Kraftstoff in den Nadelkraftstoffraum (31) einbringbar ist,
wobei in den Grundkörper (27) eine von der ersten Leitung (34) getrennte zweite Leitung (35) eingebracht ist, die einerseits mit der Nadelführung (30) und andererseits mit einem Steuerraum (36) eines Steuerventils (29) des Kraftstoffinjektors (16) gekoppelt ist, wobei über die zweite Leitung (25) ein Kraftstoff der Nadelführung (30) als Sperrfluid und dem Steuerraum (36) als Arbeitsfluid zuführbar ist.

2. Kraftstoffinjektor nach Anspruch 1,
wobei derselbe ein Dual-Fuel-Injektor ist,
wobei in einem ersten Betriebsmodus der Dual-Fuel Brennkraftmaschine der ersten Leitung (34) und der zweiten Leitung (35) jeweils ein erster, relativ zündwilliger Kraftstoff zuführbar ist,
wobei in einem zweiten Betriebsmodus der Dual-Fuel Brennkraftmaschine der zweiten Leitung (35) der erste Kraftstoff und der ersten Leitung (34) ein zweiter, relativ zündunwilliger zuführbar Kraftstoff ist.

3. Kraftstoffinjektor nach Anspruch 1 oder 2,
wobei die zweite Leitung (35) mit dem Steuerraum (36) des Steuerventils (29) über eine Drossel (37) gekoppelt ist.

4. Kraftstoffinjektor nach einem der Ansprüche 1 bis 3,
wobei die Nadelführung (30) zwischen dem Nadelkraftstoffraum (31) und dem Steuerraum (36) des Steuerventils (29) positioniert ist.

5. Kraftstoffinjektor nach Anspruch 4,
wobei zwischen der Nadelführung (30) und dem Steuerraum (36) ein Federraum (38) positioniert ist, in welchem eine Feder (39) aufgenommen ist, welche die Düsennadel (28) in die zweite Stellung drückt.

6. Dual-Fuel Brennkraftmaschine (11),
mit Zylindern (12), in welchen in einem ersten Betriebsmodus ein erster flüssiger Kraftstoff und in einem zweiten Betriebsmodus ein zweiter flüssiger Kraftstoff verbrennbar ist,
mit einem je Zylinder (12) mindestens einen Hauptinjektor (16) aufweisenden Haupteinspritzsystem, über welches den Zylindern (12) in dem ersten Betriebsmodus der erste flüssige Kraftstoff zuführbar ist, und über welches den Zylindern (12) in dem zweiten Betriebsmodus der zweite flüssige Kraftstoff zuführbar ist, wobei der jeweilige Hauptinjektor (16) nach einem der Ansprüche 1 bis 5 ausgebildet ist,
mit einem je Zylinder (12) mindestens einen Pilotinjektor (23) aufweisenden Piloteinspritzsystem, über welches in dem zweiten Betriebsmodus den Zylindern (12) der Brennkraftmaschine der erste flüssige Kraftstoff zur Zündung des zweiten flüssigen Kraftstoffs zuführbar ist.

7. Dual-Fuel Brennkraftmaschine (11) nach Anspruch 6,
wobei das Haupteinspritzsystem und das Piloteinspritzsystem derart gekoppelt sind, dass in dem zweiten Betriebsmodus ausgehend vom Piloteinspritzsystem der erste flüssige Kraftstoff dem jeweiligen Hauptinjektor (16) als Arbeitsfluid und als Sperrfluid zuführbar ist.

8. Dual-Fuel Brennkraftmaschine (11) nach Anspruch 6 oder 7,
wobei stromaufwärts des jeweiligen Pilotinjektors (23) eine jeweilige Abzweigleitung (25) vom Piloteinspritzsystem abzweigt und in die zweite Leitung (35) des jeweiligen Hauptinjektors (16) mündet.

9. Dual-Fuel Brennkraftmaschine (11) nach Anspruch 8,
wobei in die jeweilige Abzweigleitung (25) ein Druckminderer (26) integriert ist, um den Druck in der jeweiligen Abzweigleitung (25) zu begrenzen.

10. Dual-Fuel Brennkraftmaschine (11) nach einem der Ansprüche 6 bis 9,
wobei das Haupteinspritzsystem eine Hauptpumpe (17) aufweist, über die in dem ersten Betriebsmodus der erste flüssige Kraftstoff den Zylindern (12) zuführbar ist, und über die in dem zweiten Betriebsmodus der zweite flüssige Kraftstoff den Zylindern (12) zuführbar ist,
wobei das Piloteinspritzsystem eine Pilotpumpe (24) aufweist, über die in dem zweiten Betriebsmodus den Zylindern (12) der erste flüssige Kraftstoff zur Zündung des zweiten flüssigen Kraftstoffs zuführbar ist,
wobei ein Wechselventil (22) im ersten Betriebsmodus die Hauptpumpe (17) mit einem ersten Kraftstofftank (18) für den ersten Kraftstoff und im zweiten Betriebsmodus die Hauptpumpe (17) mit einem zweiten Kraftstofftank (18) für den zweiten Kraftstoff koppelt.
